# EUROPEAN PATENT SPECIFICATION

(11) **EP 1 145 886 B1**
(45) Date of publication and mention of the grant of the patent: **27.09.2006**
(21) Application number: 01201185.4
(22) Date of filing: 29.03.2001
(51) Int. Cl.: B60J 7/00, B60J 1/20

(54) **Open roof construction for a vehicle**
Öffnungsfähige Dachkonstruktion für Fahrzeug
Construction de toit ouvrant pour véhicule

(30) Priority: 13.04.2000 NL 1014933
(43) Date of publication of application: 17.10.2001
(73) Proprietor: Inalfa Roof Systems Group B.V., 5804 AH Venray (NL)
(72) Inventor: Manders, Peter Christiaan Leonardus, 5961 SM Horst (NL)
(74) Representative: Voncken, Bartholomeus Maria Ch.

(56) References cited:
- DE-C- 19 538 551
- US-A- 5 344 206

## Description

The invention relates to an open roof construction for a vehicle, comprising a roof opening formed in the roof of the vehicle and a movable panel intended for closing and at least partially freeing the roof opening, wherein a sun screen device is disposed under the plane of the roof opening, which sun screen device comprises at least a flexible cloth, which can be moved forward and backward in a direction substantially parallel to the roof opening, a winding mechanism for winding and unwinding said cloth, and guides for the side edges of the cloth.

In a first type of prior art open roof constructions of this kind (see for example DE-A-19 739 919, disclosing all features of the preamble of claim 1) the winding mechanism and the guides are connected directly or indirectly to the edge of the roof opening. A construction of that kind has a number of drawbacks, however. It is necessary to use different winding mechanisms and/or guides for different open roof constructions, so that different constructions are required at the aforesaid edges of the roof opening. This stands in the way in particular of using a universal roof liner. Furthermore, the winding mechanism and the guides of such prior art open roof constructions prevent the roof liner from extending as far as the panel.

In addition to that, there are also open roof constructions (see for example DE-A-3 607 725 or DE-A-19 538 552) wherein the winding mechanism and/or at least part of the guides is (are) mounted on the panel. It is a drawback thereby that this construction, in combination with the stiffenings that are generally used at the panel edges, leads to a large panel thickness.

The object of the invention is to provide an open roof construction of the present type, wherein the aforesaid drawbacks are eliminated in a simple yet efficient manner.

In order to accomplish that objective, the open roof construction according to the invention is characterized in that said winding mechanism and said cloth guides are with a continuous joint connected to the panel.

Within the framework of the present invention, the term "with a continous joint" is understood to mean that the winding mechanism and the guides, once they are connected to the panel, are in one piece therewith, as it were, with a continuous joint being present therebetween. This in contrast to constructions wherein the winding mechanism and/or at least part of the cloth guides are locally connected to the panel by means of discrete fixing elements.

Numerous advantages are obtained with the open roof construction according to the invention. Since the winding mechanism and the guides now form part of the panel, it is possible to use an identical roof liner for a large number of different open roof constructions, which has a significant cost-saving effect. Moreover, the roof liner can now extend as far as the panel. Owing to the integral connection between the panel on the one hand and the winding mechanism and the guides on the other hand, said winding mechanism and said guides furthermore perform a stiffening function in addition to their specific function in the sun screen device. The winding mechanism and the guides stiffen the panel edges in such a manner that the panel will locally exhibit great bending strength. So far, it has been necessary to provide separate stiffenings at the panel edges in order to obtain such great local bending strength. Since the winding mechanism and the guides now perform a double function, it is possible to minimize the local thickness (overall height) of the panel.

By connecting the winding mechanism and the guides to the panel, said winding mechanism and said guides will also move along with the panel, so that the opening of the panel has no influence whatsoever on the stability of the cloth. Another effect that is achieved therewith is the fact that the effect of the passing air flow on the cloth in the open position of the panel is reduced, so that said cloth will be soiled or damaged less easily.

In one preferred embodiment of the open roof construction according to the invention, the winding mechanism and the guides include a joint surface on the side that faces towards the panel, which functions to provide an adhesive connection with the panel.

Said joint surface makes it possible to effect the integral connection with the panel that extends continuously over a relatively large area, and which consequently provides a highly stable connection between the winding mechanism and the guides on the one hand and the panel on the other hand.

In a convenient embodiment, said adhesive connection is a glued joint in that case.

In this manner the connection, which extends over a continuous area, can be provided in a simple manner. In addition, such a glued joint provides great freedom of placement during mounting. Furthermore, an aesthetically attractive appearance (without unsightly attachments) is obtained in this manner.

In principle, such a glued joint is permanent. If a non-permanent connection is to be formed, well-known clamped connections or the like may be used, wherein the clamped connection between the winding mechanism and the guides on the one hand and the panel on the other hand extends continuously along the entire length of said winding mechanism and said guides. This is understood to mean that it is possible per se to use discrete clamping members, which provide a continuous clamping action along the length of the winding mechanism and the guides, however.

If a glued joint is used, it is advantageous from a constructional viewpoint if the joint surface is recessed for the purpose of containing a glue therein.

On the one hand, such a recess contains the glue, whereby the edges prevent the glue from flowing out in lateral direction. In addition, the edges of the recess ensure that the parts in question (the winding mechanism and the guides) are exactly positioned with respect to the panel. It can even be considered thereby to have the recess (or the edges thereof) mate with stops or the like (to facilitate mounting) on the panel in order to determine the positions of the winding mechanism or the guides and the panel with respect to each other.

Furthermore, in a special variant of an embodiment of the open roof construction according to the invention, the winding mechanism comprises a housing which accommodates a winding drum, said housing comprising a first part, which is integrally connected with the panel, and a second part, which is capable of pivoting movement with respect to said first part, between a position in which it encloses said winding drum and a position in which it provides access to said winding drum, for example for maintenance or replacement. If the winding shaft is accommodated in a housing according to the proposed embodiment, access to the winding shaft can readily be gained owing to the pivoted construction of the housing. Of course provisions may have been made for locking the housing securely in the closed position (in which it encloses the winding shaft).

In a final embodiment of the open roof construction according to the invention, said housing and said guides adjoin each other.

As a result of this construction, the edges of the cloth are retained in an effective manner along their entire length, as a result of which flapping of the cloth edges is prevented in a reliable manner. Furthermore it is possible in this manner to minimize the ingress of dirt into the guides or into the winding mechanism. In addition to this, this construction further contributes to obtaining an aesthetically attractive appearance.

The invention will now be explained in more detail with reference to the drawing, which shows an embodiment of the open roof construction according to the invention.
Figure 1 is a schematic, perspective view of a part of a panel intended for use in an open roof construction according to the invention, on which a winding mechanism comprising a housing and guides is mounted; and
Figure 2 is a larger-scale sectional view along line II-II in Figure 1.

In an open roof construction for a vehicle to which the invention relates, a roof opening is formed in the roof of the vehicle, which roof opening can be closed and at least partially be freed by a movable panel 1. The manner in which the roof opening has been formed in the roof of the vehicle and the manner in which the panel is movably mounted in the said roof opening do not fall within the framework of the present invention, and consequently they will not be discussed herein. Important is only the fact that the open roof construction comprises a sun screen device, which comprises at least a flexible cloth 2 which can be moved forward and backward in a direction substantially parallel to the roof opening, a winding mechanism 3 for winding and unwinding said cloth and guides 4 for guiding the side edges of cloth 2.

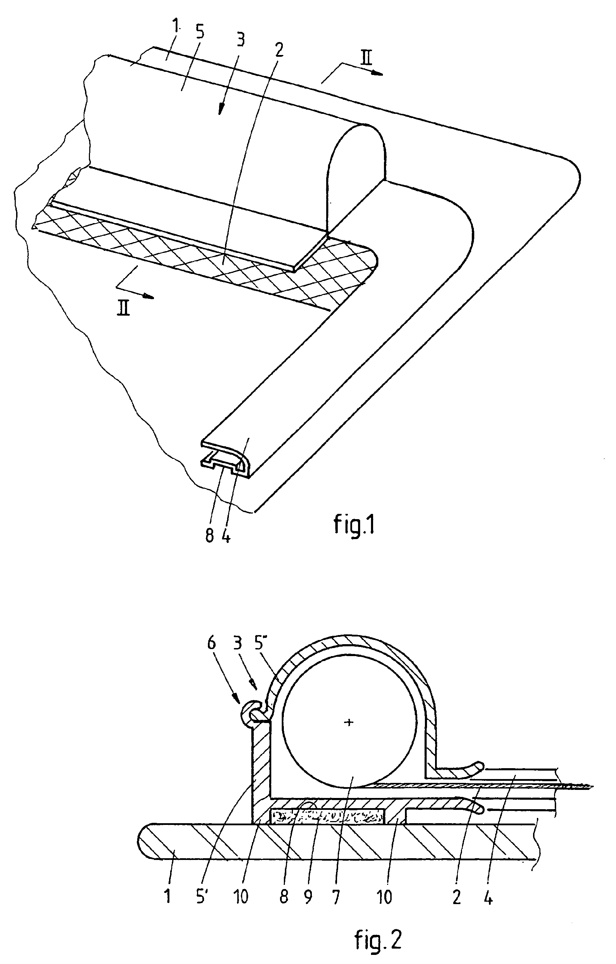

As is apparent from Figure 1, the winding mechanism and the guides are mounted on panel 1, close to the circumferential edges thereof. Winding mechanism 3 and the guides 4 are connected to the panel 1 in such a manner that a continuous joint is formed between said elements. The term continuous joint is understood to mean a connection which extends substantially continuously, usually along substantially the entire length of winding mechanism 3 and guides 4, between said winding mechanism and said guides and panel 1.

As is shown in Figure 2, the winding mechanism 3 comprises a housing consisting of a first (lower) part 5' and a second (upper) part 5' '. First part 5' is integrally connected to panel 1, whilst second part 5' ' is capable of pivoting movement with respect to first part 5' about a pivot 6. This makes it possible to either enclose a winding drum 7 disposed within housing 5 or make it accessible.

Unlike the pivot which is shown in the illustrated embodiment, pivot 6 may also be comprised of a weakened part of the material, thus forming a so-called "living hinge". Locking means that may be used for retaining housing 5 in the illustrated position are not shown in the figures. Furthermore it is conceivable that the pivoted joint allows detachment of the housing parts 5' and 5' ' from each other.

On its side facing towards panel 1, first part 5' includes a recess 8, in which a glue 9 is present. The integral connection with the panel 1 is formed by means of said glue 9. The recess 8 containing the glue 9 forms a joint surface, as it were, which functions to form an adhesive connection with panel 1.

On the one hand, the edges 10 of recess 8 prevent the glue 9 from flowing out in an uncontrolled manner during mounting, whilst on the other hand they can function as positioning aids (possibly in combination with stops (not shown) on panel 1).

As is shown in Figure 1, guide 4 is likewise provided with a corresponding recess 8 for containing a glue.

If housing 5 and guides 4 are integrally connected to panel 1 in the above-described manner, they form stiffenings for the edges of panel 1, so that said panel will have a high local bending strength at that location. This obviates the need to locally provide separate stiffenings, thus making it possible to reduce the local thickness of the panel.

As is furthermore apparent from Figure 1, housing 5 and guide 4 adjoin each other in the illustrated embodiment, so that an optimum guidance of the edges of cloth 2 is obtained. Furthermore it is possible to prevent the ingress of dirt into the guides and into the winding mechanism in this manner.

Instead of a glued joint 9, also other joining methods may be considered. Thus, housing 5 of winding mechanism 3 may, for example, comprise a U-shaped leg, which is slid over the edge of the panel, and which is tensioned in such a manner by means of suitable fixing elements that the clamped connection extends along the entire length of the housing 5. Such a construction can be used for guides 4 as well. This makes is easier to remove said parts.

The invention is not restricted to the embodiments as described above and shown in the drawings, which can be varied in several ways without departing from the scope of the invention as defined in the claims.

## Claims

1. An open roof construction for a vehicle, comprising a roof opening formed in the roof of the vehicle and a movable panel (1) intended for closing and at least partially freeing the roof opening, wherein a sun screen device is disposed under the plane of the roof opening, which sun screen device comprises at least a flexible cloth (2), which can be moved forward and backward in a direction substantially parallel to the roof opening, a winding mechanism (3) for winding and unwinding said cloth, and guides (4) for the side edges of the cloth, **characterized in that** said winding mechanism (3) and said cloth guides (4) are with a continuous joint connected to the panel.

2. An open roof construction according to claim 1, **characterized in that** the winding mechanism (3) and the guides (4) include a joining surface on the side that faces towards the panel (1), which functions to provide an adhesive connection with the panel.

3. An open roof construction according to claim 2, **characterized in that** said adhesive connection is a glued joint.

4. An open roof construction according to claim 3, **characterized in that** the joint surface is recessed (8) for the purpose of containing a glue (9) therein.

5. An open roof construction according to any one of the preceding claims, **characterized in that** the winding mechanism (3) comprises a housing (5',5") which accommodates a winding drum (7), said housing comprising a first part (5'), which is integrally connected to the panel (1), and a second part (5"), which is capable of pivoting movement with respect to said first part, between a position in which it encloses said winding drum and a position in which it provides access to said winding drum

6. An open roof construction according to claim 5, **characterized in that** said housing (5,5") and said guides (4) adjoin each other.

## Patentansprüche

1. Offendach-Konstruktion für ein Fahrzeug, aufweisend eine Dachöffnung, welche in dem Dach des Fahrzeugs ausgebildet ist, und ein bewegbares Paneel (1), welches zum Schließen und zum wenigsten teilweise Freigeben der Dachöffnung vorgesehen ist, wobei eine Sonnenschutz-Vorrichtung unter dem Paneel der Dachöffnung angeordnet ist, welche Sonnenschutz-Vorrichtung wenigsten einen flexiblen Stoff (2) aufweist, welcher in Richtung im wesentlichen parallel zu der Dachöffnung vorwärts und rückwärts bewegbar ist, einen Aufwickel-Mechanismus (3) zum Aufwickeln und Abwickeln des Stoffes und Führungen (4) für die Seitenränder des Stoffes, **dadurch gekennzeichnet, dass** der Aufwickel-Mechanismus (3) und die Stoff-Führungen (4) mit einem kontinuierlichen Anschluss an dem Paneel angeschlossen sind.

2. Offendach-Konstruktion gemäß Anspruch 1, **dadurch gekennzeichnet, dass** der Aufwickel-Mechanismus (3) und die Führungen (4) eine Anschluss-Fläche auf der dem Paneel (1) zugewandten Seite aufweisen, welche zum Bereitstellen einer Klebeverbindung mit dem Paneel funktioniert.

3. Offendach-Konstruktion gemäß Anspruch 2, **dadurch gekennzeichnet, dass** die Klebeverbindung ein geklebter Anschluss ist.

4. Offendach-Konstruktion gemäß Anspruch 3, **dadurch gekennzeichnet, dass** die Anschlussfläche mit einer Aussparung (8) für den Zweck versehen ist, einen Klebstoff (9) darin aufzunehmen.

5. Offendach-Konstruktion gemäß einem der vorhergehenden Ansprüche, **dadurch gekennzeichnet, dass** der Aufwickel-Mechanismus (3) ein Gehäuse (5', 5'') aufweist, welches eine Aufwickel-Trommel (7) unterbringt, wobei das Gehäuse ein erstes Teil (5'), welches an dem Paneel (1) einstückig angeschlossen ist, und ein zweites Teil (5'') aufweist, welche zu einer Schwenkbewegung bezüglich des ersten Teils zwischen einer Position, in welcher es die Aufwickel-Trommel einschließt, und einer Position imstande ist, in welcher es einen Zugang zu der Aufwickel-Trommel bereitstellt.

6. Offendach-Konstruktion gemäß Anspruch 5, **dadurch gekennzeichnet, dass** das Gehäuse (5', 5'') und die Führungen (4) aneinander gestoßen sind.

## Revendications

1. Structure de toit ouvrant pour un véhicule, comprenant une ouverture de toit formée dans le toit du véhicule et un panneau mobile (1) destiné à fermer et libérer au moins partiellement l'ouverture de toit, dans lequel un dispositif pare-soleil est disposé sous le plan de l'ouverture de toit, lequel dispositif pare-soleil comprend au moins une toile souple (2) qui peut être déplacée vers l'avant et vers l'arrière dans une direction sensiblement parallèle à l'ouverture de toit, un mécanisme d'enroulement (3) pour enrouler et dérouler ladite toile et des guidages (4) pour les bords latéraux de la toile, **caractérisée en ce que** le mécanisme d'enroulement (3) et lesdits guidages de toile (4) sont reliés par un joint continu au panneau.

2. Structure de toit ouvrant selon la revendication 1, **caractérisée en ce que** le mécanisme d'enroulement (3) et les guidages (4) comprennent une surface de liaison sur le côté qui fait face au panneau (1) et qui sert à fournir une liaison adhésive au panneau.

3. Structure de toit ouvrant selon la revendication 2, **caractérisée en ce que** ladite liaison adhésive est un joint collé.

4. Structure de toit ouvrant selon la revendication 3, **caractérisée en ce que** la surface de joint est évidée (8) afin de contenir une colle (9).

5. Structure de toit ouvrant selon l'une quelconque des revendications précédentes, **caractérisée en ce que** le mécanisme d'enroulement (3) comprend un logement (5', 5") qui reçoit un tambour d'enroulement (7), ledit logement comprenant une première partie (5') qui est reliée de manière solidaire au panneau (1) et une seconde partie (5") qui peut pivoter par rapport à la première partie, entre une position dans laquelle elle contient ledit tambour d'enroulement et une position dans laquelle elle permet l'accès audit tambour d'enroulement.

6. Structure de toit ouvrant selon la revendication 5, **caractérisée en ce que** ledit logement (5', 5") et lesdits guidages (4) sont contigus entre eux.
